# EUROPEAN PATENT SPECIFICATION

(11) **EP 0 817 170 B1**
(45) Date of publication and mention of the grant of the patent: **02.05.2003**
(21) Application number: 97850086.6
(22) Date of filing: 05.06.1997
(51) Int. Cl.: G10L 15/04, G10L 15/14

(54) **Method and apparatus for adaption of models of speaker verification**
Verfahren und Vorrichtung zur Anpassung von Modellen zur Sprecherverifikation
Procédé et dispositif pour adapter des modèles de vérification de l'interlocuteur

(30) Priority: 01.07.1996 SE 9602622
(43) Date of publication of application: 07.01.1998
(73) Proprietor: TELIA AB, 123 86 Farsta (SE)
(72) Inventor: Sundberg, Erik, 111 31 Stockholm (SE); Melin, Hakan, 178 31 Ekerö (SE)
(74) Representative: Hopfgarten, Nils

(56) References cited:
- EP-A- 0 444 351
- EP-A- 0 621 532
- WO-A-95/18441

## Description

### FIELD OF THE INVENTION

The present invention relates to a method and an arrangement to adapt models in speaker verification systems or similar systems using models based on data collected from a person during a certain time period. The collected data may be related to the physiology, behavior, aging of the person etc. A related area is e.g. speaker adaptive speech recognition. In systems of this type, collected data is compared to a model for the verification of the identity of the speaker or recognition of the speech in order to control a course of events in a process or of a device. For the model to be able to perform its task it has to be trained with speech data. Simpler models require less training but provide a less reliable result, while more complex models require longer training and provide a more reliable result of the verification.

The invention may be applied in all speaker verification systems that are to be used at a plurality of occasions, that is speech of the same person is to be verified at repeated occasions. As is known, speaker verification systems are utilized in order to protect information or economic values. The invention is an alternative to the approach of using PIN codes in order to identify a user. The voice recording as such may be effected either directly at the equipment where the verification is performed or is transmitted by various media. The medium may be telephony or other telecommunication media.

### STATE OF THE ART

In the prior art speaker verification systems use has been made of only one model with the special problems associated with the model. Thus, if a simple model has been used, a less reliable verification has been obtained. On the other hand, if a more complex model is used, the problem is a long term training period.

A further prior art is disclosed in document EP-A-0621532 wherein a speaker verification system employs predetermined reference voice files based on speech inputs by various persons to assemble a composite model of a speaker.

The present invention solves this problem by utilizing a plurality of different models in the same speaker verification system. The verification is put into operation with the model requiring the less amount of speech data. During the use, more speech data is continuously collected. This material is used to further train either only the more complex model or both the simpler model already in operation and the more complex model. At suitable points of time, comparisons are made of the performances of the models. When the more complex model provides a more reliable verification result, it will take over the verification in the operation situation.

It is recognized that because of the invention a speaker verification system is obtained that is readily put into operation but eventually providing increasingly reliable verification results. The invention enables a use of the advantages of different models at the same time as the effect of their respective disadvantages is minimized. Without using this technology, one has to choose a model with its associated advantages and disadvantages at the start of a speeker verification system. By shifting models it is achieved that the system dynamically adapts to the available amount of speech data. This means a great advantage over the prior art.

### SUMMARY OF THE INVENTION

Thus, the present invention as claimed in claims 1-12 provides a method for adapting a model in e.g. speaker verification, comprising model units for receiving and evaluating speech. According to the invention, speech data is collected and a first model unit is put into operation while a subsequent model unit is trained with speech data being collected during the operation of the first model unit. The performances of the model units are tested and evaluated and a subsequent model unit is put into operation when the performance thereof has reached a suitable level.

The subsequent model unit may be put into operation either instantaneously or gradually, e.g. by using a weight function.

The invention also relates to an arrangement for performing the method.

The invention is defined in detail in the accompanying claims.

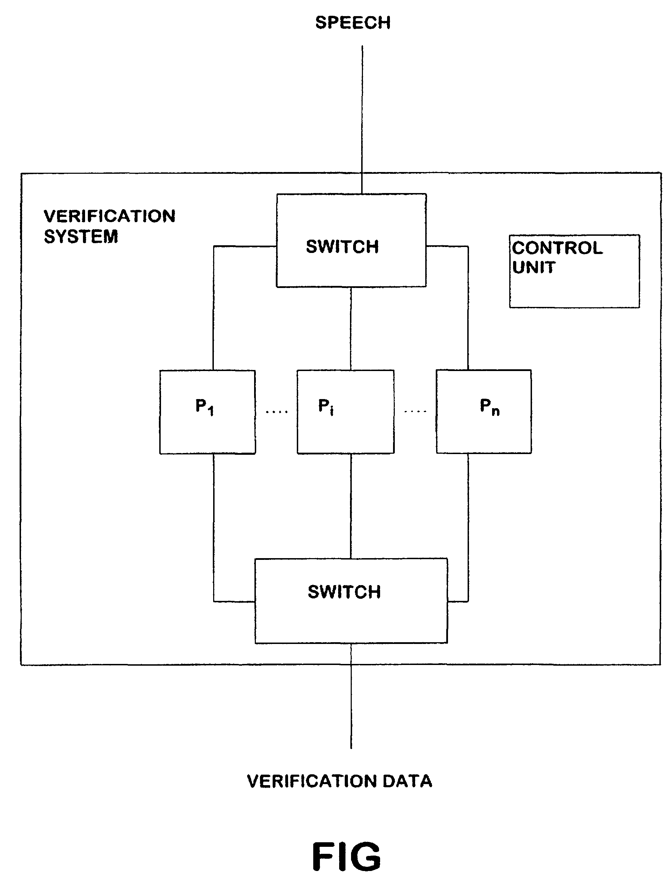

### BRIEF DESCRIPTION OF THE DRAWING

The invention will be described in detail below with reference to the attached drawing, wherein the only Figure is a schematic illustration of an embodiment of the invention.

### DETAILED DESCRIPTION OF A PREFERRED EMBODIMENT

In speaker verification systems, systems for the automatic verification of the identity of a speaker, the amount of speech data that has to be collected from the user is a determining limitation of the use. Complex speaker models requiring a large amount of collected speech data may be expected to provide a better result than models requiring a small amount of training material. However, for a small amount of training material the more complex model may yield an inferior result than the simpler model.

Complex models having many parameters have better performance than simpler models once the parameters of the model have been estimated correctly. However, for a correct estimation of the parameters a large amount of training data is required. In the case where the training data of a model is provided by a customer, the amount of training data is a factor of inconvenience for the customer. Poor performance within a model will also lead to system errors, being another factor of inconvenience for the customer. A problem that is solved by the present invention is to find model topologies having good performance with a minimum of training data.

The solution of the problem proposed herewith of both maximizing the performance of the model and minimizing the requirement of training data is to use a model system having a dynamic topology. The model has a combination of model units or parts having varying degree of complexity. The effective topology of the model is changed, such that for a given amount of training data the optimum topology is used, based on the given model unit. By using this technique, the effective complexity of the model will grow with the available amount of training data.

In the beginning of the service life of the model, the simplest model units are used, requiring only a small amount of data for a reliable estimation of its parameters. As the amount of available data grows, the more complex parts can be trained successively.

Once the parameters of the more complex unit have been estimated in a reliable way, the performance thereof is probably better than that of the simpler unit and the topology of the model may be changed in favour of the complex unit.

In the single Figure a speaker verification system in accordance with the present invention is illustrated schematically. The system comprises a control unit controlling two switches and a number of model units P₁-Pₙ. On the one hand, the system receives speech or speech data and supplies verification data as the output signal.

The various model units P₁-Pₙ of the speaker model have different requirements of training data. A model unit Pᵢ should only be used for verification when it has received sufficient training data. The units requiring a smaller amount of data will be put into operation earlier, while the more demanding units will not be used until a longer training period has elapsed. In this way, the performance of the speaker model may be enhanced towards its full capacity. During the growth period the model may still be used for verification by using the simpler model units of the speaker model.

The simpler parts may be taken out of service as the more complex units achieve better performance.

The shift to newer models may be effected over several generations, so that more and more advanced models requiring more speech data continuously is put into operation. In this way, the speaker verification system may be upgraded without being put out of operation. In addition, it is contemplated that each model consists of several submodels weighted together in various ways to define a model.

When the speaker verification system is put into operation the very first time it requires a short training period to train the simplest model unit. The simplest model unit can be trained from a speaker independent templet. Thereafter, the system is put into operation with increasing performance in accordance with what is stated above.

Each unit of the speaker model hierarchy will need to store information relating to how well trained it is. This information may be provided either by the model unit itself or by some performance testing method. In the former case, the information is called training level while, in the latter case, the information is called performance level. The training level is based on an assumed a priori knowledge about how much training data is needed by the unit. The difference between the two kinds of information is that the performance level is based on some evaluation of test data (a data base run), while the training level is based on stored information about used training data. The performance level may be based on comparisons with other units of the speaker model and even other speaker models.

Thresholds for the training level and the performance level must be provided and stored in the control unit. In the former case, the threshold is based on previously made assumptions. For the latter, it should be possible to base the value of the threshold on a criterion of the performance demand.

In order to enable use of a performance level based on data base simulation, it is necessary to include management of such a data base. The speaker model should also be able to state a value of its total training level or performance level. This value may be used by an application to estimate the significance level of a decision taken by the verification system.

The performance of the model units is tested at suitable intervals in order to check if they should be operative or not. This may be effected cyclically or on a special command.

The invention has been described with reference to a speaker verification system but, as is mentioned above, the invention may equally be applied in other systems using models based on data collected from a person under a certain time period, e.g. speaker adaptive speech recognition systems. The invention is only limited by the claims below.

## Claims

1. Method for adapting a model for a speaker verification system, comprising a plurality of model units for receiving and evaluating speech, **characterized by** collecting speech data and putting a first model unit (P₁) of the plurality of model units into operation, training a subsequent model unit (Pₙ) with speech data collected during the operation of the first model unit, testing and evaluating the performance capacities of the model units and putting the subsequent model unit into operation once the performance capacity thereof has reached a suitable level.

2. Method in accordance with claim 1, **characterized by** putting the subsequent model unit into operation instantaneously once the performance capacity thereof exceeds a predetermined threshold.

3. Method in accordance with claim 1, **characterized by** putting the subsequent model unit into operation gradually, once the performance capacity thereof exceeds a respective threshold of a plurality of predetermined thresholds.

4. Method in accordance with claim 3, **characterized by** putting the subsequent model unit into operation gradually by weighting the various model units with a variable weight function.

5. Method in accordance with anyone of the previous claims, **characterized by** connecting a new model unit as a subsequent model.

6. Method in accordance with anyone of the previous claims, **characterized by** training all model units with collected speech data.

7. Method in accordance with anyone of claims 1 to 6, **characterized by** training all model units except the respective operative model units with collected speech data.

8. Device for adapting a model for a speaker verification system, comprising a plurality of model units for receiving and evaluating speech and a control unit, **characterized by** a first switch for directing speech data to the various model units (P₁-Pₙ), a second switch for directing verification data from the various model units (P₁-Pₙ), said switches being controlled by the control unit such that the model units collect speech data and that a first model unit (P₁) of the plurality of model units is put into operation, a subsequent model unit (Pₙ) is trained with speech data collected during the operation of the first model unit, that the performance capacity of the model units are tested and evaluated and that the subsequent model unit is put into operation once the performance capacity thereof has reached a suitable level.

9. Device in accordance with claim 8, **characterized in that** a predetermined threshold is stored in the control unit in order to put the subsequent model unit into operation instantaneously, once the performance capacity thereof exceeds the predetermined threshold.

10. Device in accordance with claim 8, **characterized in that** a plurality of predetermined thresholds are stored in the control unit in order to put the subsequent model unit into operation gradually, once the performance capacity thereof exceeds a respective threshold of the pre-determined plurality of thresholds.

11. Device in accordance with claim 10, **characterized in that** the control unit comprises a variable weight function to put the subsequent model unit into operation gradually by weighting the different models with the weight function.

12. Device in accordance with anyone of claims 8 to 11, **characterized in that** a model unit consists of submodels.

## Patentansprüche

1. Verfahren zum Anpassen eines Modells für ein Sprecherverifikationssystem, das eine Mehrzahl von Modelleinheiten zum Empfangen und Auswerten von Sprache aufweist, **gekennzeichnet durch** Sammeln von Sprachdaten und **durch** Inbetriebsetzen einer ersten Modelleinheit (P₁) der Mehrzahl von Modelleinheiten, **durch** Trainieren einer nachfolgenden Modelleinheit (Pₙ) mit Sprachdaten, die während des Betriebs der ersten Modelleinheit gesammelt worden sind, **durch** Prüfen und Auswerten der Leistungsfähigkeiten der Modelleinheiten und **durch** Inbetriebsetzen der nachfolgenden Modelleinheit, sobald deren Leistungsvermögen ein geeignetes Niveau erreicht hat.

2. Verfahren nach Anspruch 1, **gekennzeichnet durch** sofortiges Inbetriebsetzen der nachfolgenden Modelleinheit, sobald deren Leistungsvermögen einen vorbestimmten Schwellenwert überschreitet.

3. Verfahren nach Anspruch 1, **gekennzeichnet durch** allmähliches Inbetriebsetzen der nachfolgenden Modelleinheit, sobald deren Leistungsvermögen einen entsprechenden Schwellwert einer Mehrzahl von vorbestimmten Schwellwerten überschreitet.

4. Verfahren nach Anspruch 3, **gekennzeichnet durch** allmähliches Inbetriebsetzen der nachfolgenden Modelleinheit **durch** Gewichten der verschiedenen Modelleinheiten mit einer variablen Gewichtsfunktion.

5. Verfahren nach einem der vorangehenden Ansprüche, **gekennzeichnet durch** Verbinden einer neuen Modelleinheit als nachfolgendes Modell.

6. Verfahren nach einem der vorangehenden Ansprüche, **gekennzeichnet durch** Trainieren aller Modelleinheiten mit gesammelten Sprachdaten.

7. Verfahren nach einem der Ansprüche 1 bis 6, **gekennzeichnet durch** Trainieren aller Modelleinheiten mit Ausnahme der in Betrieb befindlichen Modelleinheiten mit gesammelten Sprachdaten.

8. Vorrichtung zum Anpassen eines Modells für ein Sprecherverifikationssystem, das eine Mehrzahl von Modelleinheiten zum Empfangen und Auswerten von Sprache und eine Steuereinheit aufweist, **gekennzeichnet durch** einen ersten Schalter zum Richten von Sprachdaten zu den verschiedenen Modelleinheiten (P₁-Pₙ), einen zweiten Schalter zum Richten von Verifikationsdaten von den verschiedenen Modelleinheiten (P₁-Pₙ), welche Schalter **durch** die Steuereinheit so gesteuert werden, daß die Modelleinheiten Sprachdaten sammeln und daß eine erste Modelleinheit (P₁) der Mehrzahl von Modelleinheiten in Betrieb gesetzt wird, eine nachfolgende Modelleinheit (Pₙ) mit Sprachdaten trainiert wird, die während des Betriebs der ersten Modelleinheit gesammelt sind oder werden, daß das Leistungsvermögen der Modelleinheiten geprüft und ausgewertet wird und daß die nachfolgende Modelleinheit in Betrieb gesetzt wird, sobald deren Leistungsvermögen ein geeignetes Niveau erreicht hat.

9. Vorrichtung nach Anspruch 8, **dadurch gekennzeichnet, daß** ein vorbestimmter Schwellwert in der Steuereinheit gespeichert wird, um die nachfolgende Modelleinheit sofort in Betrieb zu setzen, sobald das Leistungsvermögen derselben den vorbestimmten Schwellwert überschreitet.

10. Vorrichtung nach Anspruch 8, **dadurch gekennzeichnet, daß** eine Mehrzahl von vorbestimmten Schwellwerten in der Steuereinheit gespeichert wird, um die nachfolgende Modelleinheit allmählich in Betrieb zu setzen, sobald deren Leistungsvermögen einen entsprechenden Schwellwert der vorbestimmten Mehrzahl von Schwellwerten überschreitet.

11. Vorrichtung nach Anspruch 10, **dadurch gekennzeichnet, daß** die Steuereinheit eine variable Gewichtsfunktion aufweist, um die nachfolgende Modelleinheit allmählich in Betrieb zu setzen, indem die unterschiedlichen Modelle mit der Gewichtsfunktion gewichtet werden.

12. Vorrichtung nach einem der Ansprüche 8 bis 11, **dadurch gekennzeichnet, daß** die Modelleinheit aus Untermodellen oder Teilmodellen besteht.

## Revendications

1. Procédé d'adaptation d'un modèle pour un système de vérification d'interlocuteur, comprenant une pluralité d'unités de modèle pour recevoir et évaluer la parole, **caractérisé par** la collecte de données de parole et la mise en service d'une première unité de modèle (P₁) parmi la pluralité d'unités de modèle, l'apprentissage d'une unité de modèle suivante (Pₙ) avec les données de parole collectées pendant le fonctionnement de la première unité de modèle, le contrôle et l'évaluation des capacités d'exécution des unités de modèle, et la mise en service de l'unité de modèle suivante une fois que sa capacité d'exécution a atteint un niveau approprié.

2. Procédé selon la revendication 1, **caractérisé par** la mise en service de l'unité de modèle suivante, immédiatement, dès que sa capacité d'exécution dépasse un seuil prédéterminé.

3. Procédé selon la revendication 1, **caractérisé par** la mise en service de l'unité de modèle suivante, progressivement, une fois que sa capacité d'exécution dépasse un seuil respectif parmi une pluralité de seuils prédéterminés.

4. Procédé selon la revendication 3, **caractérisé par** la mise en service de l'unité de modèle suivante, progressivement, par pondération des diverses unités de modèle avec une fonction de pondération variable.

5. Procédé selon une quelconque des revendications précédentes, **caractérisé par** la connexion d'une nouvelle unité de modèle comme modèle suivant.

6. Procédé selon une quelconque des revendications précédentes, **caractérisé par** l'apprentissage de toutes les unités de modèle avec des données de parole collectées.

7. Procédé selon une quelconque des revendications 1 à 6, **caractérisé par** l'apprentissage de toutes les unités de modèle à l'exception des unités de modèle actives respectives avec des données de parole collectées.

8. Dispositif d'adaptation d'un modèle pour un système de vérification d'interlocuteur, comprenant une pluralité d'unités de modèle pour recevoir et évaluer une parole, et une unité de commande, **caractérisé par** un premier aiguillage pour diriger les données de parole vers les diverses unités de modèle (P₁-Pₙ), un deuxième aiguillage pour diriger des données de vérification provenant des diverses unités de modèle (P₁-Pₙ), les dits aiguillages étant commandés par l'unité de commande de sorte que les unités de modèle collectent des données de parole et qu'une première unité de modèle (P₁) parmi la pluralité d'unités de modèle est mise en service, une unité de modèle suivante (Pₙ) est éduquée avec des données de parole collectées pendant le fonctionnement de la première unité de modèle, la capacité d'exécution des unités de modèle est testée et évaluée, et l'unité de modèle suivante est mise en service une fois que sa capacité d'exécution a atteint un niveau approprié.

9. Dispositif selon la revendication 8, **caractérisé en ce qu'**un seuil prédéterminé est stocké dans l'unité de commande afin de mettre en service l'unité de modèle suivante instantanément, une fois que sa capacité d'exécution dépasse le seuil prédéterminé.

10. Dispositif selon la revendication 8, **caractérisé en ce qu'**une pluralité de seuils prédéterminés sont stockés dans l'unité de commande afin de mettre en service l'unité de modèle suivante progressivement, une fois que sa capacité d'exécution dépasse un seuil respectif parmi la pluralité de seuils prédéterminés.

11. Dispositif selon la revendication 10, **caractérisé en ce que** l'unité de commande comprend une fonction de pondération variable pour mettre en service l'unité de modèle suivante progressivement par pondération des différents modèles avec la fonction de pondération.

12. Dispositif selon une quelconque des revendications 8 à 11, **caractérisé en ce qu'**une unité de modèle est constituée de sous-modèles.
